# EUROPÄISCHE PATENTSCHRIFT

(11) **EP 2 029 408 B1**
(45) Veröffentlichungstag und Bekanntmachung des Hinweises auf die Patenterteilung: **01.09.2010**
(21) Anmeldenummer: 07726091.7
(22) Anmeldetag: 20.06.2007
(51) Int. Cl.: B60T 10/04, B60T 1/10

(54) **ANTRIEB MIT ENERGIERÜCKGEWINNUNGSFUNKTION MIT BREMSDRUCKREGELVENTIL**
DRIVE WITH AN ENERGY RECOVERY FUNCTION HAVING A BRAKE PRESSURE CONTROL VALVE
ENTRAÎNEMENT À FONCTION DE RÉCUPÉRATION D'ÉNERGIE AVEC SOUPAPE DE RÉGULATION DE PRESSION DE FREINAGE

(30) Priorität: 20.06.2006 DE 102006028346; 06.09.2006 DE 102006041823
(43) Veröffentlichungstag der Anmeldung: 04.03.2009
(73) Patentinhaber: Brueninghaus Hydromatik GmbH, 89275 Elchingen (DE)
(72) Erfinder: MÜLLER, Matthias, 86356 Neusäss (DE); RAUSCH, Georg, 97816 Lohr am Main (DE)
(74) Vertreter: Beder, Jens
(86) Internationale Anmeldenummer: PCT/EP2007/005443
(87) Internationale Veröffentlichungsnummer: WO 2007/147583

(56) Entgegenhaltungen:
- EP-A2- 0 366 088
- WO-A-87/01993
- US-A- 5 799 562
- US-A1- 2001 047 654

## Beschreibung

Die Erfindung betrifft einen Antrieb mit Energierückgewinnungsfunktion.

Ein Antrieb mit Energierückgewinnungsfunktion ist aus der US 6,712,166 B2 bekannt. Bei dem dort vorgeschlagenen System wird einerseits durch eine Pumpe-Motor-Anordnung Druckmittel aus einem Reservoir in einen Druckspeicher gefördert, sofern die Pumpe-Motor-Anordnung aufgrund der Massenträgheit des Fahrzeugs während eines Verzögerungsvorgangs angetrieben wird. Um auch dann über den hydrostatischen Antrieb ein Abbremsen des Fahrzeugs zu ermöglichen, wenn die Kapazitätsgrenze der Druckspeicher erreicht ist, ist es bei dem dort vorgeschlagenen Antrieb vorgesehen, unter Umgehung der Speicherelemente einen Strömungswiderstand zu erzeugen und Druckmittel durch die Pumpe-Motor-Anordnung in einem geschlossenen Kreislauf zu fördern.

Das dort vorgeschlagene System hat den Nachteil, dass ein Wechsel von dem Speicher auf den zusätzlichen geschlossenen Kreislauf erfolgt, wenn die Speicherelemente ihre Kapazitätsgrenze erreicht haben und somit zur Speicherung von Druckenergie unter Verrichtung von Bremsarbeit nicht mehr herangezogen werden können. Die Drosselung erfolgt in einem zusätzlichen Kreislauf. Es ist dagegen aus der US 6,712,166 B2 nicht bekannt, eine Drosselventileinheit vorzusehen, welche eine Drosselfunktion in einer Speicherleitung zwischen der Pumpe-Motor-Anordnung und dem Speicherelement ermöglicht. Das Vorsehen der beiden getrennten Funktionen, die in einem komplexen Steuerungssystem miteinander verknüpft werden müssen, erfordert nicht nur eine beträchtliche Abstimmungsarbeit, sondern es erfordert auch einen hohen konstruktiven Aufwand. Dies führt zu hohen Kosten ebenso wie die zusätzlichen mechanischen Komponenten, die erforderlich sind.

Der Erfindung liegt die Aufgabe zugrunde, einen Antrieb mit Energierückgewinnungsfunktion zu schaffen, welcher zusätzlich zu der Bremsleistung aufgrund der Speicherung von Energie einen steuerbaren Strömungswiderstand für die als Pumpe betriebene hydrostatische Kolbenmaschine bereitstellt.

Die Aufgabe wird durch den erfindungsgemäßen Antrieb mit den Merkmalen des Anspruchs 1 gelöst.

Gemäß Anspruch 1 weist der Antrieb mit Energierückgewinnungsfunktion eine hydrostatische Kolbenmaschine und zumindest ein damit verbundenes Speicherelement auf. Die Kolbenmaschine und das Speicherelement sind über eine Speicherleitung miteinander verbunden. Die Speicherleitung wird durch eine Drosselventileinheit in einen ersten Speicherleitungsabschnitt und einen zweiten Speicherleitungsabschnitt aufgeteilt. Die Drosselventileinheit umfasst eine Steuerdruckventileinheit und ein Einbauventil, wobei ein von der Steuerdruckventileinheit eingestellter Steuerdruck auf das Einbauventil wirkt und so eine variable Drosselung des Volumenstroms zwischen der hydrostatischen Kolbenmaschine und dem Speicherelement ermöglicht.

Der erfindungsgemäße hydrostatische Antrieb hat den Vorteil, dass der Leitungsaufwand gering ist und insbesondere auch bei einem niedrigen Ladezustand des Druckspeichers bereits eine hohe Bremswirkung ermöglicht wird. Im Gegensatz zu dem aus dem Stand der Technik bekannten Antrieb ist es hier möglich, den Strömungswiderstand, gegen den die hydrostatische Kolbenmaschine fördert, mittels der Drosselventileinheit zu erhöhen. Dies ist insbesondere dann erforderlich, wenn die Druckspeicher noch leer sind und somit keinen ausreichenden Strömungswiderstand erzeugen. Durch das Bereitstellen eines Steuerdrucks mittels der Steuerdruckventileinheit kann ein einfaches Einbauventil zur Drosselung des Volumenstroms in der Speicherleitung eingesetzt werden. Die Verwendung des Steuerdrucks als Stellgröße für das Einbauventil hat ferner den Vorteil, dass hohe Kräfte bei dem Ventil erzeugbar sind, die eine schnelle Reaktion ermöglichen.

In den Unteransprüchen sind vorteilhafte Weiterbildungen des erfindungsgemäßen hydrostatischen Antriebs ausgeführt.

Insbesondere ist es vorteilhaft, einerseits an dem Einbauventil in einer Richtung den Steuerdruck wirken zu lassen und andererseits in entgegengesetzter Richtung den Förderdruck der hydrostatischen Kolbenmaschine sowie den in dem Speicherelement herrschenden Speicherdruck. In Abhängigkeit von dem durch die Steuerdruckventileinheit erzeugten Steuerdruck stellt sich somit ein konstanter Gegendruck für die hydrostatische Kolbenmaschine ein. Somit lässt sich insbesondere, wie dies gemäß einer weiteren bevorzugten Ausführungsform beansprucht ist, bei Verwendung eines elektrisch betätigten Druckbegrenzungsventils zur Erzeugung des Steuerdrucks in einfacher Weise der Gegendruck für die hydrostatische Kolbenmaschine einstellen. Die Ansteuerung kann dann ebenfalls vorteilhaft durch eine elektronische Steuereinheit realisiert werden, welche neben dem aktuellen Fahrzustand auch Benutzereingaben, wie beispielsweise Bremspedalstellung oder ähnliches berücksichtigen kann.

Weiterhin ist es vorteilhaft, die Steuerdruckventileinheit über eine Steuerdruckzuleitung aus einer Druckmittelquelle zu versorgen und diese Steuerdruckzuleitung über das Druckbegrenzungsventil in ein Tankvolumen zu entspannen. Die Regelung erfolgt also durch Ablassen eines Drucks aus der Steuerdruckzuleitung. Dabei ist insbesondere die Steuerdruckzuleitung vorteilhaft über eine Drossel mit einem förderseitigen Anschluss der hydrostatischen Kolbenmaschine verbindbar. Gemäß einer weiteren besonders bevorzugten Ausführungsform erfolgt die Verbindung der Steuerdruckzuleitung mit dem förderseitigen Anschluss der hydrostatischen Kolbenmaschine über ein Wechselventil. In Abhängigkeit von den Druckverhältnissen an dem förderseitigen Ausgang der hydrostatischen Kolbenmaschine sowie in dem Speicherelement wird durch das Wechselventil die Steuerdruckzuleitung entweder mit dem förderseitigen Anschluss der hydrostatischen Kolbenmaschine oder aber mit dem Speicherelement verbunden.

Zur Verhinderung von Leckage durch das elektrisch steuerbare Druckbegrenzungsventil ist in der Steuerdruckzuleitung vorzugsweise stromaufwärts des Druckbegrenzungsventils ein Schaltventil angeordnet. Das Schaltventil ist vorzugsweise ebenfalls elektrisch betätigt und dient der Unterbrechung der Steuerdruckzuleitung. Einen Leckage durch das stromabwärts angeordnete Druckbegrenzungsventil wird somit vermieden.

Zur Erzeugung eines Steuersignals für das Druckbegrenzungsventil, welches seinerseits zur Erzeugung des Steuerdrucks vorgesehen ist, ist vorzugsweise eine elektronische Steuereinheit vorgesehen, durch welche das Druckbegrenzungsventil elektromagnetisch steuerbar ist. Die elektronische Steuereinheit ist eingangsseitig mit einem Drucksensor verbunden, welcher einen Druckwert an die elektronische Steuereinheit übermittelt. Das Steuersignal wird durch die elektronische Steuereinheit in Abhängigkeit von diesem gemessenen Druckwert sowie einem vorgebbaren Solldruckwert ermittelt. Der gemessene Druckwert kann entweder bei einer Regelung des Einbauventils der an dem förderseitigen Anschluss der hydrostatischen Kolbenmaschine erzeugte Druck sein oder aber im Falle einer Steuerung des Einbauventils der in dem Speicherelement herrschende Druck.

Das Einbauventil ist vorzugsweise so ausgeführt, dass es durch den Steuerdruck sowie eine gleichsinnig hierzu wirkende Federkraft in Schließrichtung belastet ist. In entgegengesetzer Richtung wirkt in schon genannter Weise sowohl der Förderdruck der hydrostatischen Kolbenmaschine als auch der Speicherdruck des Speicherelements.

Bevorzugte Ausführungen des erfindungsgemäßen Antriebs sind in der Zeichnung dargestellt und werden in der nachfolgenden Beschreibung näher erläutert. Es zeigen:
- Fig. 1: ein erstes Ausführungsbeispiel eines erfindungsgemäßen Antriebs; und
- Fig. 2: ein zweites Ausführungsbeispiel eines erfindungsgemäßen Antriebs.

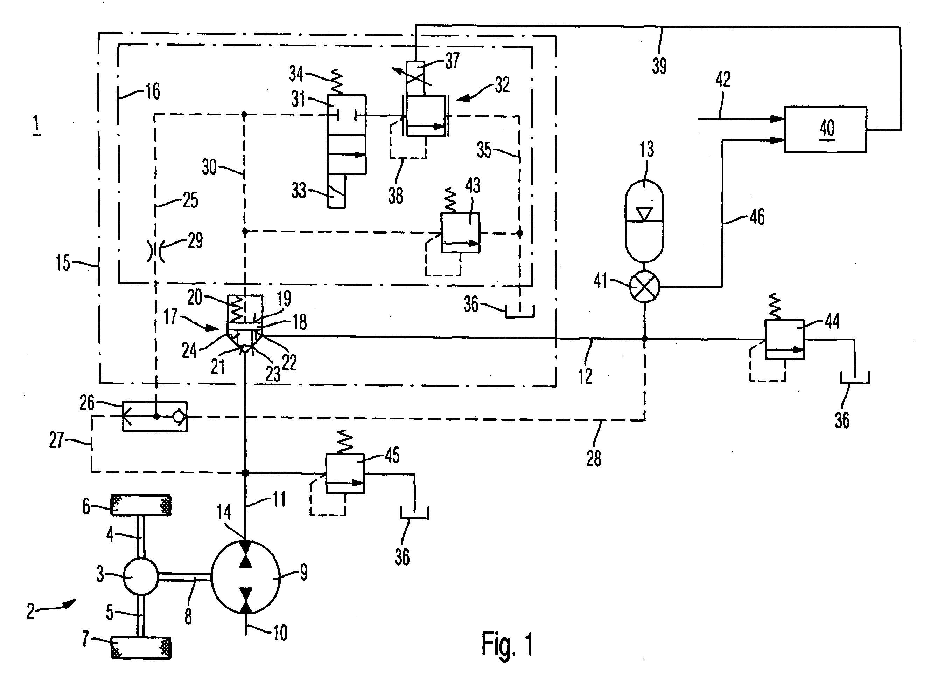

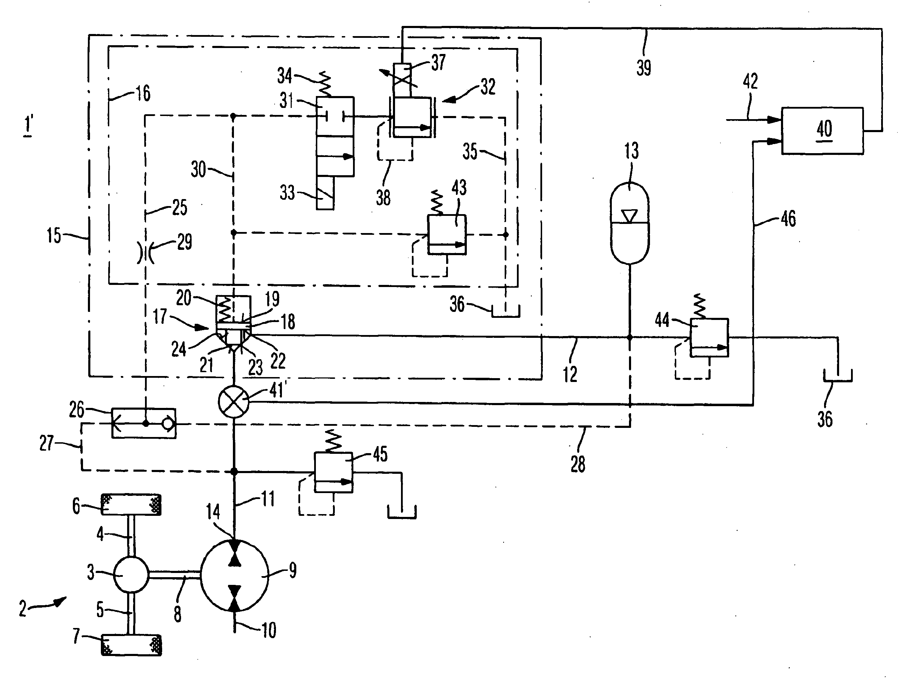

In der Fig. 1 ist ein hydraulischer Schaltplan eines ersten Ausführungsbeispiels eines Antriebs 1 mit Energierückgewinnungsfunktion dargestellt. Der Antrieb 1 ist im dargestellten Ausführungsbeispiel zur Energierückgewinnung bei einem Fahrantrieb 2 beispielsweise eines Müllsammelfahrzeugs oder eines Staplers vorgesehen. Bei solchen Fahrzeugen treten intensive Fahrzyklen auf, d. h. es folgen Brems- und Beschleunigungsvorgänge oft dicht aufeinander.

Der Fahrantrieb 2 umfasst ein Differential 3, welches über eine erste Halbwelle 4 und eine zweite Halbwelle 5 auf eine erstes angetriebenes Rad 6 und ein zweites angetriebenes Rad 7 wirkt. Das Differential 3 ist über eine Abtriebswelle 8 mit einer hydrostatischen Kolbenmaschine 9 verbunden. Weitere Komponenten, die zu dem Fahrantrieb 2 gehören, sind in der Zeichnung der besseren Übersichtlichkeit wegen nicht dargestellt. Die hydrostatische Kolbenmaschine 9 kann entweder eine separate Kolbenmaschine sein, welche ausschließlich zur Energierückgewinnung eingesetzt wird, oder aber ein Hydromotor eines hydrostatischen Fahrantriebs sein. Ebenso ist die Ankopplung über eine Abtriebswelle 8 an das Differential 3 des Fahrantriebs 2 lediglich beispielhaft zu verstehen.

Die hydrostatische Kolbenmaschine 9 ist über eine Saugleitung 10 mit einem Druckmittelreservoir verbunden. Im einfachsten Fall dient als Druckmittelreservoir ein druckloses Tankvolumen. Alternativ kann als Druckmittelreservoir auch ein Hydrospeicher vorgesehen sein. Zur Speicherung von kinetischer Energie während eines Bremsvorgangs wird die hydrostatische Kolbenmaschine 9 aufgrund der Massenträgheit des angetriebenen Fahrzeugs als Pumpe betrieben, so dass die hydrostatische Kolbenmaschine 9 über die Saugleitung 10 aus dem Druckmittelreservoir Druckmittel ansaugt. Die hydrostatische Kolbenmaschine 9 fördert dieses Druckmittel in eine an ihrem förderseitigen Anschluss 14 verbundene Speicherleitung. Die Speicherleitung verbindet die hydrostatische Kolbenmaschine 9 mit einem Speicherelement 13. Das Speicherelement 13 ist beispielsweise ein Hydromembranspeicher. Insbesondere ist das Speicherelement 13 ein Hochdruckspeicher.

Die Speicherleitung umfasst einen ersten Speicherleitungsabschnitt 11 und einen zweiten Speicherleitungsabschnitt 12. Der erste Speicherleitungsabschnitt 11 und der zweite Speicherleitungsabschnitt 12 sind über eine Drosselventileinheit 15 miteinander verbindbar.

Die Drosselventileinheit 15 umfasst zum Erzeugen eines Steuerdrucks eine Steuerdruckventileinheit 16. Der von der Steuerdruckventileinheit 16 bereitgestellte Steuerdruck wirkt auf ein Einbauventil 17. Das Einbauventil 17 ist im dargestellten Ausführungsbeispiel als Sitzventil ausgebildet. In dem Einbauventil 17 ist ein Ventilkolben 18 längsverschieblich angeordnet. Der Ventilkolben 18 weist eine Steuerdruckfläche 19 auf, an der der Ventilkolben 18 durch den Steuerdruck mit einer hydraulischen Kraft beaufschlagt wird. Gleichsinnig wirkt auf den Ventilkolben 18 die Kraft einer Ventilfeder 20. In entgegengesetzter Richtung wirkt auf den Ventilkolben 18 die Summe zweier hydraulischer Kräfte, die durch den in dem ersten Speicherleitungsabschnitt 11 und dem zweiten Speicherleitungsabschnitt 12 herrschenden Drücke erzeugt wird. Hierzu weist der Ventilkolben 18 eine erste druckbeaufschlagbare Fläche 21 und eine zweite druckbeaufschlagbare Fläche 22 auf. Die erste und die zweite druckbeaufschlagbare Fläche 21, 22 sind an dem Ventilkolben 18 durch eine abgestufte Geometrie des Ventilkolbens 18 ausgebildet. Der vorzugsweise rotationssymmetrisch ausgebildete Ventilkolben 18 weist am Übergang von der ersten druckbeaufschlagbaren Fläche 21 zu der zweiten druckbeaufschlagbaren Fläche 22 eine Dichtkante 23 auf, welche dichtend mit einem Dichtsitz 24 zusammenwirkt, sofern sich das Einbauventil 17 in seiner geschlossenen Position befindet. Durch die Ventilfeder 20 wird der Ventilkolben 18 in drucklosem Zustand in seiner geschlossenen Position gehalten.

Zum Erzeugen eines Steuerdrucks an der Steuerdruckfläche 19 ist eine Steuerdruckzuleitung 25 mit einem Wechselventil 26 verbunden. Das Wechselventil 26 verbindet die Steuerdruckzuleitung 25 entweder mit einer Förderdruckzweigleitung 27 oder mit einer Speicherdruckzweigleitung 28 als Druckmittelquelle. In Abhängigkeit von den in der Förderdruckzweigleitung 27 und der Speicherdruckzweigleitung 28 herrschenden Drücke wird die Steuerdruckzuleitung 25 jeweils mit derjenigen Leitung verbunden, die den größeren Druck aufweist. In der Steuerdruckzuleitung 25 ist vorzugsweise innerhalb der Steuerdruckventileinheit 16 eine fest eingestellte oder einstellbare Drossel 29 angeordnet.

Die Steuerdruckzuleitung 25 ist über eine Verbindungsleitung 30 mit dem Einbauventil 17 verbunden, so dass der in der Steuerdruckzuleitung 25 herrschende Druck der Steuerdruckfläche 19 zugeführt wird und den Ventilkolben 18 in Schließrichtung mit einer hydraulischen Kraft beaufschlagt. Zum Einstellen der Höhe des in der Steuerdruckzuleitung 25 herrschenden Drucks sind in der Steuerdruckzuleitung 25 ein Schaltventil 31 und ein steuerbares Druckbegrenzungsventil 32 angeordnet. Durch das Schaltventil 31 kann bei entsprechender Betätigung eines Elektromagneten 33 die Verbindung von der Steuerdruckzuleitung 25 zu dem Druckbegrenzungsventil 32 vollständig unterbrochen werden, um einen Leckstrom durch das Druckbegrenzungsventil 32 zu verhindern. In seiner Ruhestellung ist das Schaltventil 31 durch eine Druckfeder 34 in Richtung dieser geöffnete Position beaufschlagt. Soll durch das Druckbegrenzungsventil 32, welches steuerbar ausgeführt ist, die Höhe des in der Steuerdruckzuleitung 25 herrschenden Steuerdrucks eingestellt werden, so wird der Elektromagnet 33 betätigt. Bei Bestromen des Elektromagneten 33 wird das Schaltventil 31 in seine zweite Schaltposition gebracht, in der eine durchströmbare Verbindung von der Steuerdruckzuleitung 25 zu dem Druckbegrenzungsventil 32 erzeugt wird.

Das Druckbegrenzungsventil 32 ist über einen Elektromagneten 37 steuerbar. Der Elektromagnet 37 ist vorzugsweise ein Proportionalmagnet, der mit einem Steuersignal beaufschlagt wird, wodurch der Öffnungsdruck des Druckbegrenzungsventils 32 eingestellt wird. Entgegengesetzt zu der Kraft des Elektromagneten 37 wirkt auf das Druckbegrenzungsventil 32 eine hydraulische Kraft, die an einer Messfläche durch einen über eine Messleitung 38 zugeführten Eingangsdruck des Druckbegrenzungsventils 32 erzeugt wird. Der Eingangsdruck entspricht bei geöffnetem Schaltventil 31 dem Druck der Steuerdruckzuleitung 25. Übersteigt diese hydraulische Kraft, die durch den von der Eingangsseite des Druckbegrenzungsventils 32 zugeführten Druck erzeugt wird, die in entgegengesetzter Richtung wirkende Kraft des Elektromagneten 37, so wird das Druckbegrenzungsventil 32 in Richtung seiner geöffneten Position verschoben. In der geöffneten Position des Druckbegrenzungsventils 32 wird die Steuerdruckzuleitung 25 mit einer Entspannungsleitung 35 verbunden. Die Entspannungsleitung 35 mündet in ein Tankvolumen 36 aus. In Abhängigkeit von der resultierenden Kraft auf das Druckbegrenzungsventil 32 wird folglich eine gedrosselte Verbindung zwischen der Steuerdruckzuleitung 25 und der Entspannungsleitung 35 erzeugt. Infolgedessen stellt sich an der Drossel 29 ein Druckabfall ein, so dass auf das Einbauventil 17 an dessen Steuerdruckfläche 19 ein einstellbarer Steuerdruck herrscht.

Während eines Bremsvorgangs wird in bereits beschriebener Weise durch die hydrostatische Kolbenmaschine 9 Druckmittel aus der Saugleitung 10 in den ersten Speicherleitungsabschnitt 11 gefördert. Der in dem Speicherleitungsabschnitt 11 herrschende Druck wirkt auf die druckbeaufschlagbare Fläche 21. Gleichzeitig wirkt auf die zweite druckbeaufschlagbare Fläche 22 der in dem Speicherelement 13 herrschende Druck. Ist die Summe der so erzeugten hydraulischen Kräfte größer als die in entgegengesetzter Richtung wirkende Summe der Kraft der Ventilfeder 20 und der hydraulischen Kraft an der Steuerdruckfläche 19, so wird das Einbauventil 17 in Richtung seiner geöffneten Position verstellt und das Speicherelement 13 wird mit Druckmittel befüllt.

Mit zunehmendem Druck in dem Speicherelement 13 nimmt auch die hydraulische Kraft an der zweiten druckbeaufschlagbaren Fläche 22 zu. Infolgedessen wird das Einbauventil 17 weiter in Richtung seiner geöffneten Position verstellt, so dass die Drosselung an dem Einbauventil 17 reduziert wird. Damit wird durch die zunehmende Öffnung des Einbauventils 17 und die damit niedrigere Drosselwirkung zwischen der Dichtkante 23 und dem Dichtsitz 24 der höhere Gegendruck des Speicherelements 13 berücksichtigt. In einer bevorzugten Ausführung wird der sich erhöhende Gegendruck durch die Druckerhöhung in dem Speicherelement 13 durch die sich reduzierende Drosselung durch das Einbauventil 17 gerade kompensiert. Für einen konstanten Steuerdruck an der Steuerdruckfläche 19 erfährt das Fahrzeug somit eine konstante Bremswirkung unabhängig von dem jeweiligen Ladezustand des Speicherelements 13.

Die Höhe des jeweiligen Steuerdrucks wird durch ein Steuersignal festgelegt, welches über eine Signalleitung 39 dem Elektromagneten 37 des Druckbegrenzungsventils 32 zugeführt wird. Die Signalleitung 39 verbindet den Elektromagneten 37 mit einer elektronischen Steuereinheit 40. Die elektronische Steuereinheit 40 ermittelt einen Wert für das Steuersignal, welches über die Signalleitung 39 dem Elektromagneten 37 zugeführt wird. Als Eingangsgröße verwendet die elektronische Steuereinheit 40 dabei zumindest das Drucksignal eines Drucksensors 41. Der Drucksensor 41 ist mit der elektronischen Steuereinheit 40 über eine Sensorleitung 46 verbunden. In dem ersten dargestellten Ausführungsbeispiel der Fig. 1 ist der Drucksensor 41 in dem zweiten Speicherleitungsabschnitt 12 angeordnet. Der gemessene Druckwert, der der elektronischen Steuereinheit 40 zugeführt wird, entspricht somit dem in dem Speicherelement 13 herrschenden Druck. Somit ist das System gesteuert, da es lediglich den in dem Speicherelement 13 herrschenden Druck, nicht aber den auf der Förderseite der hydrostatischen Kolbenmaschine 9 erzeugten Druck berücksichtigt. Als weitere Eingangsgröße kann über eine weitere Signalleitung 42 beispielsweise ein Sollwert vorgegeben werden oder eine Bremspedalsstellung.

Zur Absicherung der Drosselventileinheit 15 ist in der Steuerdruckventileinheit 16 ein erstes Sicherheitsventil 43 vorgesehen, welches die Leitung 30 mit der Entspannungsleitung 35 verbindet, sofern der Steuerdruck einen durch das Sicherheitsventil 43 vorgegebenen kritischen Wert übersteigt.

Ein zweites Sicherheitsventil 44 ist mit dem zweiten Speicherleitungsabschnitt 12 verbunden und entspannt diesen in das Tankvolumen 36, sofern hier ein kritischer Druckwert überschritten wird. Ein drittes Sicherheitsventil 45 ist mit dem ersten Speicherleitungsabschnitt 10 verbunden und entspannt diesen und somit die Förderseite der hydrostatischen Kolbenmaschine 9 in das Tankvolumen 36, wenn ein kritischer Druckwert in dem ersten Speicherleitungsabschnitt 11 überschritten wird. Alternativ zu der Darstellung mit drei Sicherheitsventilen 43-45 können auch die Sicherheitsventile 43 und 44 entfallen. Die Absicherung erfolgt dann über das dritte Sicherheitsventil 45. Bei einem unzulässig hohen Anstieg des Steuerdrucks wird das Einbauventil 17 in seine geschlossene Position gebracht. Infolgedessen steigt der förderseitige Druck in dem ersten Speicherleitungsabschnitt 11 an, was zu einer Öffnung des dritten Sicherheitsventils 45 führt.

In der Fig. 2 ist ein zweites Ausführungsbeispiel des erfindungsgemäßen Antriebs 1' gezeigt. Die mit den Elementen der Fig. 1 übereinstimmenden Elemente sind mit denselben Bezugszeichen versehen. Um unnötige Wiederholungen zu vermeiden, wird auf eine erneute vollständige Beschreibung verzichtet.

Im Unterschied zu der Fig. 1 ist ein Drucksensor 41' in dem ersten Speicherleitungsabschnitt 10 angeordnet. Als Eingangsgröße für die elektronische Steuereinheit 40 dient somit nicht der in dem Speicherelement 13 herrschende Druck, sondern der durch die hydrostatische Kolbenmaschine 9 in dem ersten Speicherleitungsabschnitt 11 erzeugte Druck. Im Gegensatz zu der Steuerung des Ausführungsbeispiels nach Fig. 1 handelt es sich bei dem Ausführungsbeispiel der Fig. 2 um eine Regelung, da der sich tatsächlich ergebende Gegendruck für die hydrostatische Kolbenmaschine 9 bei der Ermittlung des Steuersignals für den Elektromagneten 37 des Druckbegrenzungsventils 32 berücksichtigt wird. Dementsprechend erfolgt aufgrund des sich ergebenden neuen Förderdrucks der hydrostatischen Kolbenmaschine 9 unmittelbar eine Korrektur des Steuersignals, das an die Steuersignalleitung 39 durch die elektronische Steuereinheit 40 ausgegeben wird.

## Patentansprüche

1. Antrieb mit Energierückgewinnungsfunktion mit einer hydrostatischen Kolbenmaschine (9) und zumindest einem damit verbundenen Speicherelement (13) und mit einer eine Speicherleitung in einen ersten Speicherleitungsabschnitt (11) und einen zweiten Speicherleitungsabschnitt (12) teilenden Drosselventileinheit (15), wobei die Drosselventileinheit (15) eine Steuerdruckventileinheit (16) und ein Einbauventil (17) umfasst auf das ein durch die Steuerdruckventileinheit (16) erzeugter Steuerdruck wirkt.

2. Antrieb nach Anspruch 1,
**dadurch gekennzeichnet,**
**dass** das Einbauventil (17) an einer Steuerdruckfläche (19) mit dem Steuerdruck beaufschlagbar ist und in entgegengesetzter Richtung mit einem Förderdruck und mit einem Speicherdruck beaufschlagbar ist.

3. Antrieb nach Anspruch 1 oder 2,
**dadurch gekennzeichnet,**
**dass** die Steuerdruckventileinheit (16) zur Erzeugung des Steuerdrucks ein steuerbares Druckbegrenzungsventil (32) umfasst, durch welches eine Steuerdruckzuleitung (25) mit einem Tankvolumen (36) verbindbar ist.

4. Antrieb nach Anspruch 3,
**dadurch gekennzeichnet,**
**dass** die Steuerdruckzuleitung (25) über eine Drossel (29) mit einem förderseitigen Anschluss (14) der hydrostatischen Kolbenmaschine (9) verbindbar ist.

5. Antrieb nach Anspruch 3 oder 4,
**dadurch gekennzeichnet,**
**dass** die Steuerdruckzuleitung(25) durch ein Wechselventil (26) mit dem förderseitigen Anschluss (14) der hydrostatischen Kolbenmaschine (9) oder mit dem Speicherelement (13) verbindbar ist.

6. Antrieb nach einem der Ansprüche 3 bis 5,
**dadurch gekennzeichnet,**
**dass** in der Steuerdruckzuleitung (25) stromaufwärts des Druckbegrenzungsventils (32) ein Schaltventil (31) vorgesehen ist.

7. Antrieb nach einem der Ansprüche 3 bis 6,
**dadurch gekennzeichnet,**
**dass** das Druckbegrenzungsventil (32) elektromagnetisch steuerbar ist und durch eine elektronische Steuereinheit (40) ein Steuersignal erzeugbar ist.

8. Antrieb nach Anspruch 7,
**dadurch gekennzeichnet,**
**dass** das Steuersignal durch die elektronische Steuereinheit (40) in Abhängigkeit eines gemessenen Druckwerts und eines Solldruckwerts ermittelbar ist.

9. Antrieb nach einem der Ansprüche 1 bis 8,
**dadurch gekennzeichnet,**
**dass** das Einbauventil (17) durch den Steuerdruck in Schließrichtung belastet ist und gleichsinnig zu der so erzeugten hydraulischen Kraft zusätzlich eine Federkraft wirkt.

## Claims

1. Drive with energy recovery function, with a hydrostatic piston engine (9) and at least one reservoir element (13) connected to it, and with a choke valve unit (15) which divides a reservoir conduit into a first reservoir conduit section (11) and a second reservoir conduit section (12), the choke valve unit (15) comprising a control pressure valve unit (16) and a cartridge insert valve (17), on which a control pressure generated by the control pressure valve unit (16) acts.

2. Drive according to Claim 1,
**characterized in that**
the control pressure can be applied to the cartridge insert valve (17) on a control pressure surface (19), and in the opposite direction a delivery pressure and a receiver pressure can be applied to the cartridge insert valve (17).

3. Drive according to Claim 1 or 2,
**characterized in that**
to generate the control pressure, the control pressure valve unit (16) includes a controllable pressure limiting valve (32), through which a control pressure feed line (25) can be connected to a tank volume (36).

4. Drive according to Claim 3,
**characterized in that**
the control pressure feed line (25) can be connected via a choke (29) to a pressure-side connection (14) of the hydrostatic piston engine (9).

5. Drive according to Claim 3 or 4,
**characterized in that**
the control pressure feed line (25) can be connected via a shuttle valve (26) to the pressure-side connection (14) of the hydrostatic piston engine (9), or to the reservoir element (13).

6. Drive according to any one of Claims 3 to 5,
**characterized in that**
in the control pressure feed line (25), upstream from the pressure limiting valve (32), a selector valve (31) is provided.

7. Drive according to any one of Claims 3 to 6,
**characterized in that**
the pressure limiting valve (32) can be controlled electromagnetically, and a control signal can be generated by an electronic control unit (40).

8. Drive according to Claim 7,
**characterized in that**
the control signal can be determined by the electronic control unit (40) depending on a measured pressure value and a setpoint pressure value.

9. Drive according to any one of Claims 1 to 8,
**characterized in that**
the cartridge insert valve (17) is stressed by the control pressure in the closing direction, and additionally, in the same direction as the thus generated hydraulic force, a spring force acts.

## Revendications

1. Entraînement à fonction de récupération d'énergie avec une machine à piston hydrostatique (9) et au moins un élément de stockage (13) relié à celle-ci et avec une unité de papillon (15) séparant une conduite de stockage en une première section de conduite de stockage (11) et une deuxième section de conduite de stockage (12), où l'unité de papillon (15) comporte une unité de vanne de pression de commande (16) et une vanne de montage (17) sur laquelle agit une pression de commande produite par l'unité de vanne de pression de commande (16).

2. Entraînement selon la revendication 1,
**caractérisé en ce que**
la vanne de montage (17) peut être chargée à une face de pression de commande (19) d'une pression de commande et peut être chargée dans la direction opposée d'une pression de convoyage et d'une pression de stockage.

3. Entraînement selon la revendication 1 ou 2,
**caractérisé en ce que**
l'unité de vanne de pression de commande (16), pour produire la pression de commande, comporte une vanne de limitation de pression (32) pouvant être commandée, par laquelle une conduite d'amenée de pression de commande (25) peut être reliée à un volume de réservoir (36).

4. Entraînement selon la revendication 3,
**caractérisé en ce que**
la conduite d'amenée de pression de commande (25) peut être reliée par un papillon (29) à un raccordement côté convoyage (14) de la machine à piston hydrostatique (9).

5. Entraînement selon la revendication 3 ou 4,
**caractérisé en ce que**
la conduite d'amenée de pression de commande (25) peut être reliée par une vanne de changement (26) à un raccordement côté convoyage (14) de la machine à piston hydrostatique (9) ou à l'élément de stockage (13).

6. Entraînement selon l'une des revendications 3 à 5,
**caractérisé en ce qu'**
il est prévu dans la conduite d'amenée de commande (25), en amont de la vanne de limitation de pression (32), une vanne de commutation (31).

7. Entraînement selon l'une des revendications 3 à 6,
**caractérisé en ce que**
la vanne de limitation de pression (32) peut être commandée d'une manière électromagnétique, et par une unité de commande électronique (40), un signal de commande peut être produit.

8. Entraînement selon la revendication 7,
**caractérisé en ce que**
le signal de commande peut être déterminé par l'unité de commande électronique (40) en fonction d'une valeur de pression mesurée et d'une valeur de pression de consigne.

9. Entraînement selon l'une des revendications 1 à 8,
**caractérisé en ce que**
la vanne de montage (17) est chargée par la pression de commande dans la direction de fermeture, et une force de ressort agit additionnellement dans le même sens à la force hydraulique produite.
